(19) **Europäisches Patentamt / European Patent Office / Office européen des brevets**

(11) **EP 3 198 126 B1**

(12) **EUROPEAN PATENT SPECIFICATION**

(45) Date of publication and mention
of the grant of the patent:
**13.01.2021  Bulletin 2021/02**

(51) Int Cl.:
*F02B 41/04* (2006.01)          *F02B 75/06* (2006.01)
*F16H 21/00* (2006.01)

(21) Application number: **15781032.6**

(86) International application number:
**PCT/EP2015/071803**

(22) Date of filing: **22.09.2015**

(87) International publication number:
**WO 2016/046243 (31.03.2016 Gazette 2016/13)**

(54) **INTERNAL COMBUSTION ENGINE AND METHOD TO BUILD IT**

BRENNKRAFTMASCHINE UND VERFAHREN ZUR HERSTELLUNG DAVON

MOTEUR À COMBUSTION INTERNE ET SON PROCÉDÉ DE CONSTRUCTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **23.09.2014  IT CS20140028**

(43) Date of publication of application:
**02.08.2017  Bulletin 2017/31**

(73) Proprietor: **Miceli, Giuseppe Maria
88040 Pianopoli (IT)**

(72) Inventor: **Miceli, Giuseppe Maria
88040 Pianopoli (IT)**

(74) Representative: **Perrotta, Aldo
Ing. Aldo Perrotta
Corso Umberto 81
88068 Soverato (IT)**

(56) References cited:
**WO-A1-01/02752          WO-A1-02/23026
WO-A1-2009/045127     US-A- 5 732 673**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical field of the invention

Subject of the present invention, is an internal combustion engine comprising one or more cylinders, inside each of which a piston slides in variable strokes, which realizes the strokes of intake, compression, combustion and exhaust with a 360 ° rotation of two crank shafts.

The present invention is in the field of engine destined to automotive applications as well as the engine destined to fixed installation such as generators.

### State of the art

Several systems have been used for mechanisms for variable-stroke pistons for internal combustion engines.

One of these mechanisms is illustrated in US5927236A, it essentially uses concentric gear wheels to obtain the variable stroke in the different strokes. The mechanism, however, has the disadvantage of not being modifiable once the toothed wheels have been realized and also it is difficult to assemble.

### Summary of the Invention

The present invention has the main purpose of obtaining a mechanism for an internal combustion engine with variable stroke of the piston with rods whose length can be modified either in the design phase and in the phase of set up of the engine, allowing small variations in the stroke .

The main purpose of the present invention is to provide an internal combustion combustion engine comprising one or more cylinders, inside each of which a piston slides, and two crankshafts, which are provided with cranks integral with two gear wheels that have equal diameter being fixed on the engine crankcase and are free to rotate, characterised in that each piston is connected to the first crank of the first crankshaft integral with the first gear wheel through a first connecting rod, a rod, and a second connecting rod, an end of the rod is connected to one end of an arm, the latter being free to rotate at the end around a pin fixed on the engine crankcase, the two gearwheels meshing each other, the second crank of the second crankshaft is connected to the arm by means of a third connecting rod.

Another characteristic is given by the fact that the two crankshafts provided with counterweights integral with the two gear wheels, the first connecting rod, the rod, the second connecting rod, the arm, and the third connecting rod are connected to each other through pins which allow the rotation. Another characteristic is given by the fact that the first connecting rod is connected to one end of the rod, the second connecting rod is connected to an intermediate point of the rod, the arm is connected to the other end of the rod. Another characteristic is the fact that the first connecting rod, the second connecting rod and the arm are connected to the rod by means of pins which allow the rotation. Another characteristic is the fact that the first connecting rod and the second connecting rod are connected to the same end of the rod. Another characteristic is the fact that the first connecting rod and the second connecting rod are connected to the same end of the rod by means of a pin which allows rotation. Another characteristic is the fact that the third connecting rod is mounted at one end to the crank of the crankshaft and to an intermediate point of the arm at the other end.

Another characteristic is the fact that the third connecting rod at the two ends is connected to the crankshaft and to the arm by means of pins that allow the rotation. Another main objective is to provide a method to build an internal combustion engine characterized in that the coordinates of the end of the rod connected to the first connecting rod are a function of the following elements: the coordinates of the rotation center of the crank of the crankshafts, the coordinates of the rotation center of the arm, the diameter of the toothed wheels, corresponding to the distance between the rotation centers of the cranks, distance between the rotation center of crankshaft and the rotation center of the arm, distance between the rotation center of crankshaft and the rotation center of the arm, crank radius of the crankshafts, angle formed by the line joining the rotation center of the arm and the center of the pin and the line joining the rotation center of the arm and the center of the pin, angle that the crank shaft forms with the line joining the rotation centers of the shafts, the angle that crank shaft forms with the line joining the centers of rotation of the shafts, the distance on the arm, the distance on the arm, the distance of the connecting rod, the distance of the connecting rod, the distance of the rod.

The appropriate changes in the dimensions of the elements: coordinates of rotation center of the crank of the crankshafts, coordinates of the rotation center of the arm, the diameter of the toothed wheels, corresponding to the distance of the rotation centers of the cranks, distance between the rotation center of crankshafts and the rotation center of the arm, crank radius of the crankshafts, angle formed by the line joining the center of rotation of the arm and the center of the pin and the line joining the rotation center of the arm and the center of the pin, angle that each crank shaft forms with the line joining the centers of rotation of the shafts, the distance on the arms, the distance of the connecting rods, the distance of the rod, allow to design the position of the two top dead centers and bottom dead centers in the combustion cycle, adapting them to the characteristics requested. Through this method it is possible to manufacture engines with a variable stroke by modifying the geometry of the elements that form the engine of the present invention. Another characteristic is the fact that the following elements: the coordinates of the rotation points of the crankshafts, the coordinates of the two arms that rotate around the pin, the radii of the cranks of the crankshafts, the lengths of the first and the second connecting rod, the length of the rod, the initial angles of the cranks of the first and the second crankshafts with the abscissa axis as reference, the angle between the line joining the centres of the pins and the line joining the centres of the pins, the length of the line joining the centres of the pins and the line joining the centres of the pins belonging to the arm, can be modified in such a way that the line joining the top dead points is not perpendicular to the axis of the cylinder (11) within which the piston (12) slides, realising a volume of the combustion chamber that is different from that of the exhaust chamber.

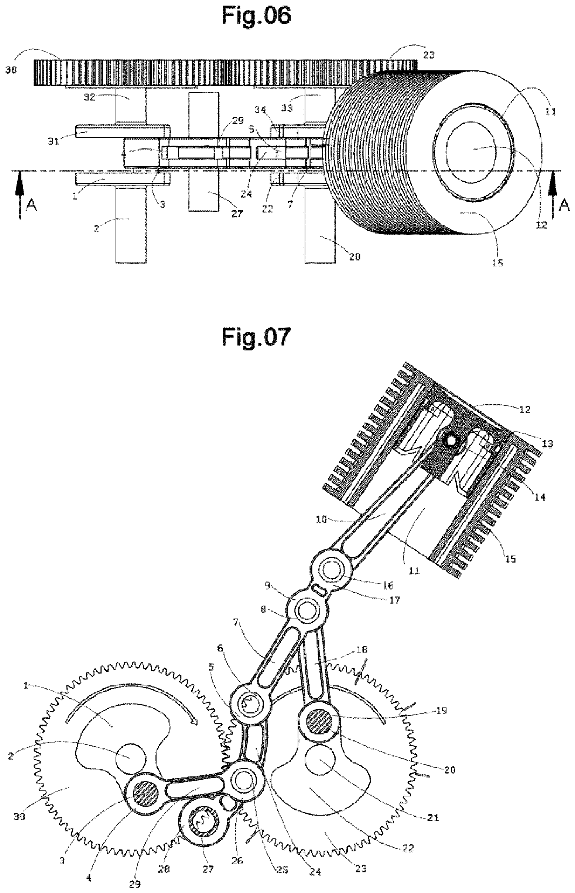

Other features and advantages of the invention will become clear from the description, below, of embodiments given by way of non-limiting example in figures 1, 2, 3, 4, 5, 6, 7, 8, 9, 10, 11, 12, 13 and 14.

**Brief description of figures**

Fig. 1 shows an isometric view of the internal combustion engine of the present invention with the cylinder broken away, to show the piston in the combustion phase;

Fig. 2 is a top view of the internal combustion engine of the present invention with the piston at the upper dead point, end the exhaust phase and the beginning of intake;

Fig. 3 represents a section perpendicular to the crankshaft of the internal combustion engine of the present invention with the piston at the upper dead point, the end of the exhaust phase and the beginning of intake;

Fig. 4 is a top view of the internal combustion engine of the present invention with the piston at the first bottom dead center, end of the intake phase;

The Fig. 5 is a section perpendicular to the crankshaft of the internal combustion engine of the present invention with the piston at the first bottom dead center, the end of the intake phase;

Fig. 6 is a top view of the internal combustion engine of the present invention with the piston at the upper dead center, end of the compression phase;

Fig. 7 is a section perpendicular to the crankshaft of the internal combustion engine of the present invention with the piston at the upper dead center, end of the compression phase;

Fig. 8 is a top view of the internal combustion engine of the present invention with the piston at second bottom dead center, end of the combustion phase;

Fig. 9 represents a section perpendicular to the crankshaft of the internal combustion engine of the present invention with the piston at second bottom dead center, end of the combustion phase;

Fig. 10 is a schematic view of the rods of the internal combustion engine of the present invention when it is on the first upper dead center, end of the exhaust phase;

Fig. 11 is a schematic view of the rods of the internal combustion engine of the present invention when it is on the first bottom dead center, end of the intake phase;

Fig. 12 is a schematic view of the rods of the internal combustion engine of the present invention when it is on the second upper dead center, end of the compression phase;

Fig. 13 is a schematic view of the rods of the internal combustion engine of the present invention when it is on the second bottom dead center, end of the combustion phase;

Fig. 14 is a schematic diagram of the internal combustion engine with a Cartesian reference system with origin at a fixed point of the motor with the same symbols used in the mathematical representation.

**Preferred way of an embodiment of the invention**

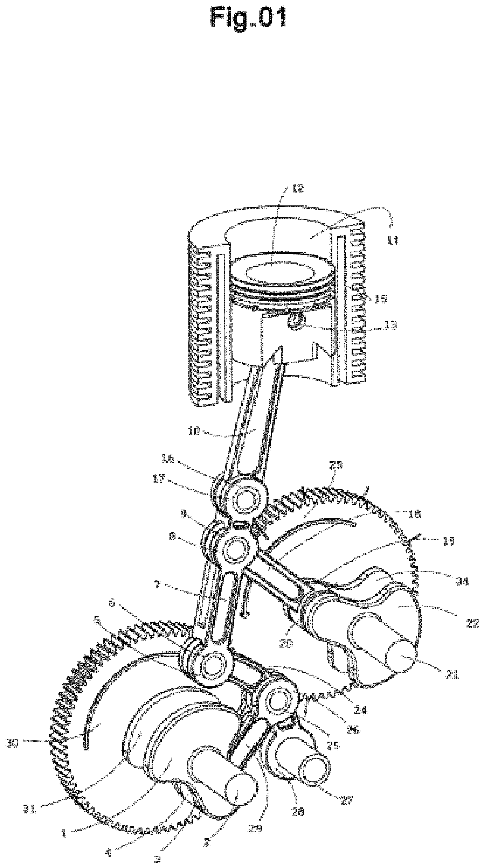

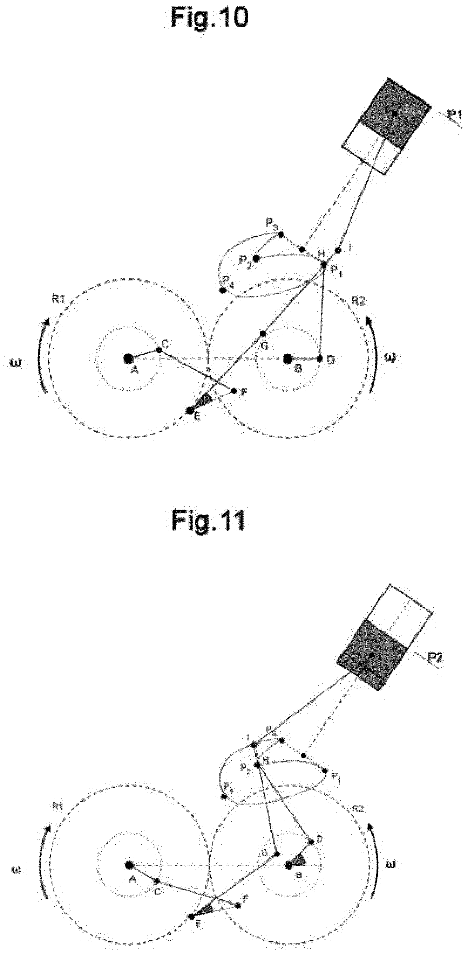

With reference to Fig.1 the internal combustion engine of the present invention comprising a cylinder (11), which can be equipped with a cooling jacket (15), in said cylinder (11) slides a piston (12) which with a pin (13) is connected to a first connecting rod (10), a first crankshaft (21) and a second crankshaft (2), free to rotate on the fixed base of the engine, two toothed wheels (30) and (23), of equal diameter, integral with the crankshaft (2) and (21) with which they are coupled, an arm (24) which rotates around the pin (27), fixed to the crankcase and connected with the foot of the connecting rod (29) to the piston pin (25) and the head closed on the pin of the shaft (2); on the same arm (24) the rod (7) is connected to the pin (6). The rod (7) via the pin (8) is connected to the head of the connecting rod (18) which is closed on the pin of the shaft (21) and by means of the pin (16) is connected to the connecting rod (10), and then via the pin (13) to the piston. The internal combustion engine of the present invention as Fig. 10, the points H and I which may be also coincident, connect the rod (7) to the connecting rod (10), by describing in a turn (rotation of 360 °) of crankshafts a closed path in a heart shape, with two top dead centers at P1 and P3 and two bottom dead centers in correspondence of P2 and P4.

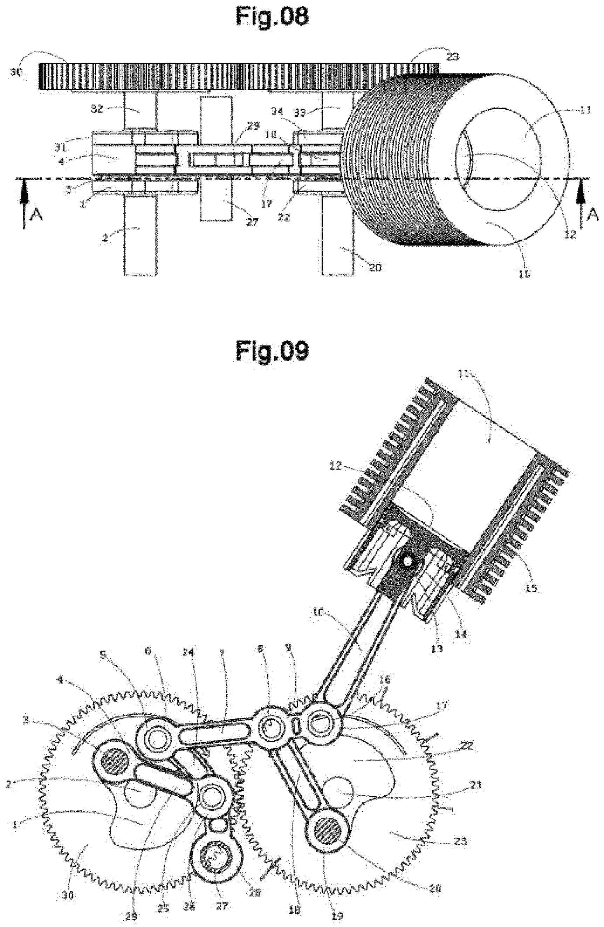

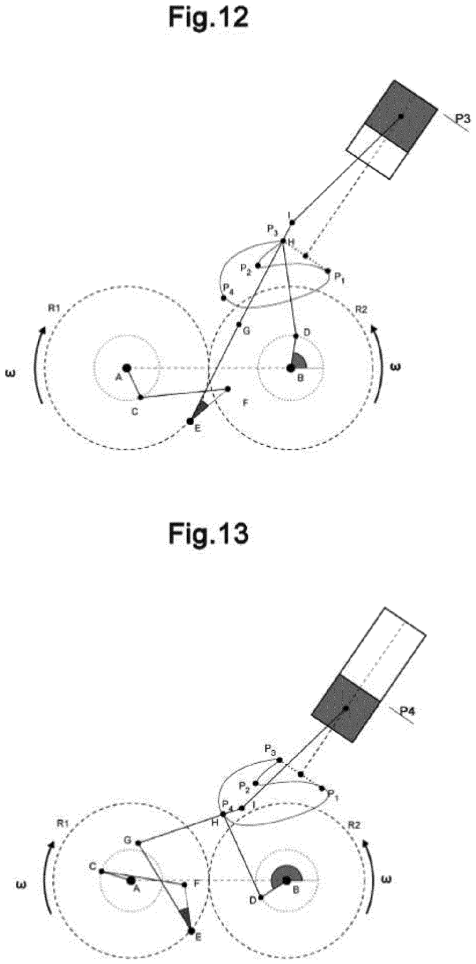

In the active phase, combustion phase, see Fig. 8 and 9 the piston (12) from the first upper dead center, moving downward in the cylinder (11) transmit the energy produced by the combustion chamber, not described, the connecting rod (10), whose head is connected to the pin (13), which in turn will transfer said energy with the pin (16) and with the pin (8) to the rod (7) and to the connecting rod (18); the connecting rod (18) put in rotation the crankshaft (21), the toothed wheel (23) integral with the crankshaft (21) will gear the gear wheel (30) integral to the crankshaft (2). The rod (7) will transmit the movement via the pin (6) to the arm (24) by placing it in rotation by means of the pin (27) integral with the crankcase; on the same arm (24), the hinge (25) which connects the connecting rod (29) rotates the shaft (2) in the opposite direction to the shaft (21), at the end of the phase the piston will reach the dead center P4, the angle (GHD) Fig. 13 between the rod (7) and the connecting rod (18) reaches the maximum value.

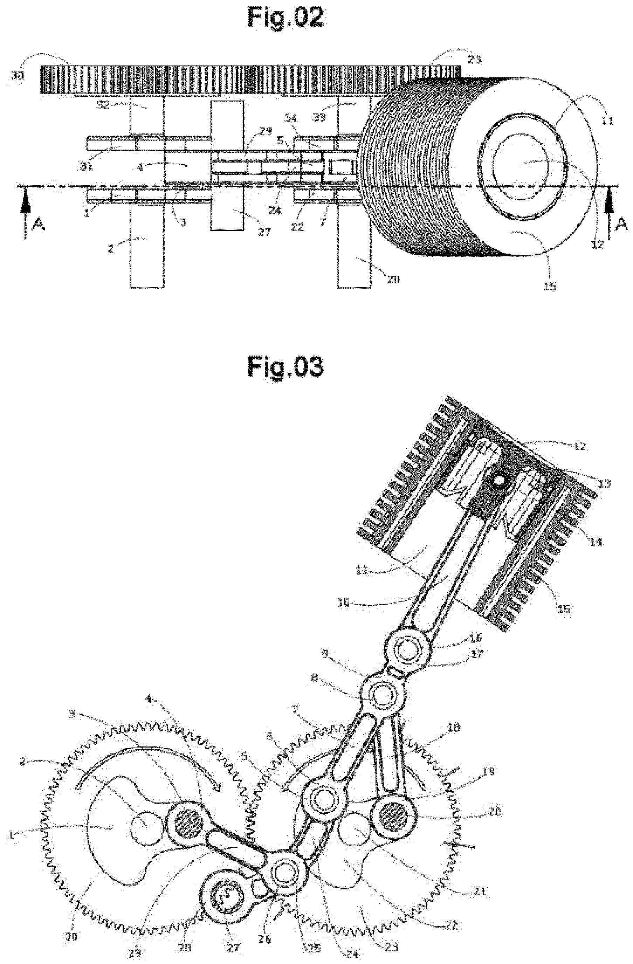

In the discharge phase, see Fig. 2 and 3, the energy stored by counterweights (1) and (22) will continue the rotation of the shafts, the arm (24) having changed the rotation direction in the opposite direction will push the rod (7), which together with the connecting rod (18) via the connecting rod (10), move the piston (12) upward to reach the dead center P1, see Fig. 2 and 3 where it will end the exhaust phase of the flue gas outlet, the points E, G, H, I, Fig. 10 will be aligned.

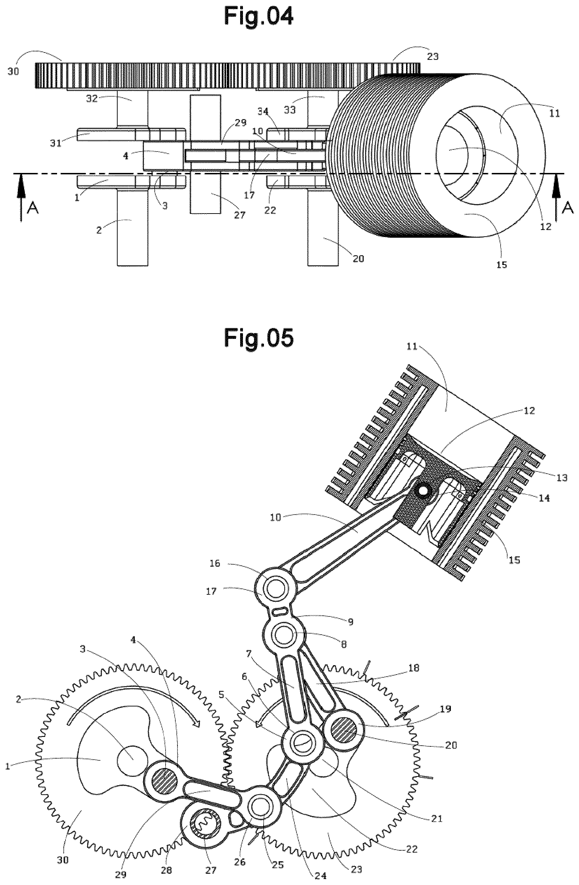

From the dead center P1 the shafts still rotating initiate the intake phase, see Fig. 4 and 5, the rod (7) by decreasing the angle with the connecting rod (18) will make descend the piston that will reach the point P2 that is the first bottom dead center that is the end of the intake Fig. 4 and 5 and Fig. 11.

In the compression phase with the shafts still rotating the arm (24) changes direction of rotation, when the points E, G, H, I will be again aligned Fig. 12, the piston will be at the upper dead center P3, shafts will have completed a rotation of 360 ° and the cycle will begin again.

With reference to Figures 10, 11, 12, 13 and 14, a fixed system of orthogonal Cartesian axes can be determined: coordinates of A, the center of rotation of the crank of the crankshaft (2), coordinates of B, the center of rotation of the crank of the crankshaft (21), coordinates of E, the center of rotation of the arm (24), AB distance corresponding to the diameter of the toothed wheels (23,30), AE distance between the center of rotation of crankshaft (2) and the center of rotation of the arm (24), BE distance between the center of rotation of crankshaft (21) and the center of rotation of the arm (24), the AC crank radius of the crankshaft (2), BD the crank radius of the crankshaft (21), angle (GEF), formed by the line EF joining the centers of the pins (27) and (25) of the arm (24) and the line EG joining the centers of the pins (27) and (6) of the arm (24), the angle (ACB) that the crank AC forms with the line AB joining, the angle (ABD) in that the crank DB form with the line joining points AB, the distance EF (27), (25) on the arm (24), the distance EG (27), (6) on the arm (24), the distance CF - connecting rod (29), (3), (25), the distance DH - connecting rod (18), (20), (8), the distance GH - rod (7) (6), (8).

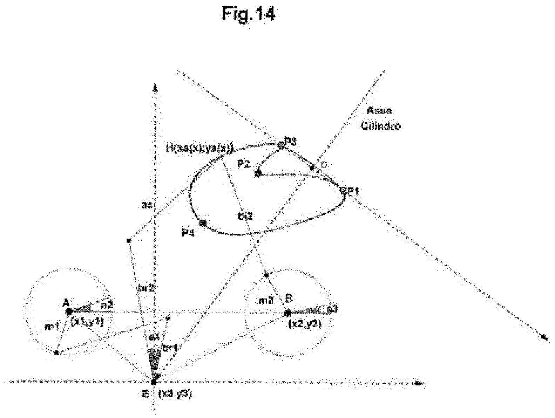

With the rotation of the point C around A, the crank CA with angular speed equal and opposite to the speed of the crank BD, will make describe a periodic closed curve to point H, which will be internal to the circle with center E and radius (EG + GH), tangent to it at two points P1 and P3. The line passing through the midpoint of the segment joining points P1 and P3, and the point E determines the axis of the cylinder that will allow the piston connected with the connecting rod (10) to the H point, when it will be coincident with P1 and P3 to reach the top dead center in both cases. Applying a reference system Fig. 14 with origin O in the midpoint of the segment P1 - P3 and the ordinate axis coinciding with the axis of the cylinder and the line joining the origin with point E, OE is the positive direction, with respect to this the reference curve described by the point H will have two concavities facing upwards inside of which will be identified two minimum points P1 and P3, and two downward concavity within which will be identified two points of maximum P2 and P4. The piston is connected with the connecting rod (10) to the point H, when it will be coincident with P1 and P3 will reach the top dead center, when coincide with P2 has finished the intake, when it will be coincident with P4, the combustion will be concluded. By rotating the axis of the cylinder, and then the reference system described, with respect to P1 or P3 it is possible to space the dead centers of the desired quantity obtaining a different volume of the combustion chamber.

When the distance HI is different from zero the curve is no longer that one described by the point H, but from the point I.

With reference to Fig. 10,11,12,13,14, in a fixed Cartesian reference system it is possible to determine the coordinates of the connection point of the first connecting rod (10) with the rod (7), H ($x_a$ (x), $y_a$ (x)), by setting two equations which calculate the abscissa and the ordinate of the point as a function of the variable x, angle formed by the crank AC with the abscissa axis of the reference system.

If you fix: coordinates of A ($x_1$, $y_1$); coordinates of B ($x_2$, $y_2$); coordinates of E($x_3$, $y_3$); AC=$m_1$; BD = $m_2$; angle (GEF) = $a_4$; angle (ACB) = $a_2$; angle (ABD) = 3; EF = $b_{r1}$; EG = $b_{r2}$; CF = $b_{i1}$; DH = $b_{i2}$; GH = as.

You will get:

xa(x)=x3 - br2*cos(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + as*cos(acos(((x2 - x3 + br2*cos(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*cos(a3 - x))^2 + (y2 - y3 + br2*sin(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*sin(a3 - x))^2 + as^2 - bi2^2)/(2*as*((x2 - x3 + br2*cos(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*cos(a3 - x))^2 + (y2 - y3 + br2*sin(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*sin(a3 - x))^2)^(1/2))) + atan((y2 - y3 + br2*sin(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*sin(a3 - x))/(x2 - x3 + br2*cos(a4 - atan(abs(y1 - y3 + m1*sin(a2 + x))/abs(x1 - x3 + m1*cos(a2 + x))) - acos(((x1 - x3 + m1*cos(a2 + x))^2 + (y1 - y3 + m1*sin(a2 + x))^2 - bi1^2 + br1^2)/(2*br1*((x1 - x3 + m1*cos(a2 + x))^2 + (y1 - y3 + m1*sin(a2 + x))^2)^(1/2)))) + m2*cos(a3 - x))));

and

$$ya(x)=y3 - br2*sin(a4 - atan(abs(y1 - y3 + m1*sin(a2 + x))/abs(x1 - x3 + m1*cos(a2 + x)))$$

$$- acos(((x1 - x3 + m1*cos(a2 + x))\wedge2 + (y1 - y3 + m1*sin(a2 + x))\wedge2 - bi1\wedge2 +$$

$$br1\wedge2)/(2*br1*((x1 - x3 + m1*cos(a2 + x))\wedge2 + (y1 - y3 + m1*sin(a2 + x))\wedge2)\wedge(1/2)))) +$$

$$as*sin(acos(((x2 - x3 + br2*cos(a4 - atan(abs(y1 - y3 + m1*sin(a2 + x))/abs(x1 - x3 +$$

$$m1*cos(a2 + x))) - acos(((x1 - x3 + m1*cos(a2 + x))\wedge2 + (y1 - y3 + m1*sin(a2 + x))\wedge2 -$$

$$bi1\wedge2 + br1\wedge2)/(2*br1*((x1 - x3 + m1*cos(a2 + x))\wedge2 + (y1 - y3 + m1*sin(a2 +$$

$$x))\wedge2)\wedge(1/2)))) + m2*cos(a3 - x))\wedge2 + (y2 - y3 + br2*sin(a4 - atan(abs(y1 - y3 +$$

$$m1*sin(a2 + x))/abs(x1 - x3 + m1*cos(a2 + x))) - acos(((x1 - x3 + m1*cos(a2 + x))\wedge2 + (y1$$

$$- y3 + m1*sin(a2 + x))\wedge2 - bi1\wedge2 + br1\wedge2)/(2*br1*((x1 - x3 + m1*cos(a2 + x))\wedge2 + (y1 -$$

$$y3 + m1*sin(a2 + x))\wedge2)\wedge(1/2)))) + m2*sin(a3 - x))\wedge2 + as\wedge2 - bi2\wedge2)/(2*as*((x2 - x3 +$$

$$br2*cos(a4 - atan(abs(y1 - y3 + m1*sin(a2 + x))/abs(x1 - x3 + m1*cos(a2 + x))) -$$

$$acos(((x1 - x3 + m1*cos(a2 + x))\wedge2 + (y1 - y3 + m1*sin(a2 + x))\wedge2 - bi1\wedge2 +$$

$$br1\wedge2)/(2*br1*((x1 - x3 + m1*cos(a2 + x))\wedge2 + (y1 - y3 + m1*sin(a2 + x))\wedge2)\wedge(1/2)))) +$$

$$m2*cos(a3 - x))\wedge2 + (y2 - y3 + br2*sin(a4 - atan(abs(y1 - y3 + m1*sin(a2 + x))/abs(x1 -$$

$$x3 + m1*cos(a2 + x))) - acos(((x1 - x3 + m1*cos(a2 + x))\wedge2 + (y1 - y3 + m1*sin(a2 + x))\wedge2$$

$$- bi1\wedge2 + br1\wedge2)/(2*br1*((x1 - x3 + m1*cos(a2 + x))\wedge2 + (y1 - y3 + m1*sin(a2 +$$

$$x))\wedge2)\wedge(1/2)))) + m2*sin(a3 - x))\wedge2)\wedge(1/2))) + atan((y2 - y3 + br2*sin(a4 - atan(abs(y1 -$$

$$y3 + m1*sin(a2 + x))/abs(x1 - x3 + m1*cos(a2 + x))) - acos(((x1 - x3 + m1*cos(a2 + x))\wedge2$$

$$+ (y1 - y3 + m1*sin(a2 + x))\wedge2 - bi1\wedge2 + br1\wedge2)/(2*br1*((x1 - x3 + m1*cos(a2 + x))\wedge2 +$$

$$(y1 - y3 + m1*sin(a2 + x))\wedge2)\wedge(1/2)))) + m2*sin(a3 - x))/(x2 - x3 + br2*cos(a4 -$$

$$atan(abs(y1 - y3 + m1*sin(a2 + x))/abs(x1 - x3 + m1*cos(a2 + x))) - acos(((x1 - x3 +$$

$$m1*cos(a2 + x))\wedge2 + (y1 - y3 + m1*sin(a2 + x))\wedge2 - bi1\wedge2 + br1\wedge2)/(2*br1*((x1 - x3 +$$

$$m1*cos(a2 + x))\wedge2 + (y1 - y3 + m1*sin(a2 + x))\wedge2)\wedge(1/2)))) + m2*cos(a3 - x))));$$

Once the equations are set, it is possible to determine the curve described by point H, also solving equation built imposing distance $(HE)^2$ (x) equals $(EG + GH)^2$ you will get a quadratic equation in x: $[xa(x)^2 + ya(x)^\wedge 2 - (br2 + as)^2 = 0$ whose roots will allow the calculation of the coordinates of the top dead centers P1 and P3. Obtained these coordinates, it will be possible to execute a translation of the reference axis with the origin coinciding with the midpoint of the segment P1-P3, the abscissa axis passing through P1 and P3, and the ordinate axis oriented toward E coincident with the axis of the cylinder; in this new reference system the reference curve will be tangent with the abscissa axis at the points P1 and P3, and will be located throughout in the half-plane of the positive ordinate, will have two concavity downward and two upward which will also be coincident, with this orientation it will be possible to determine the points of maximum that will allow to calculate P2 and P4. Calculated the four dead centers P1, P2, P3, P4 determined the diameter of the piston, it will be possible to determine the volume of intake air, the volume of expansion and calculate in each phase the speed and acceleration of the piston and the power that can be developed . An internal combustion engine performs the traditional four-stroke phases: intake, compression, combustion and exhaust in two revolutions of the crankshaft, the engine subject of the present invention performs the stroke-phases intake, compression, combustion and exhaust in a tour of two shafts engines; the volume aspirated by a traditional engine is equal to the expansion volume; in the engine of the present invention the intake volume can be a fraction of the designed expansion volume. The expansion volume of the aspiration allow greater recovery of energy from the exploded gas that can be expelled at lower temperatures, with considerable environmental advantages. The engine of the present invention, at the same rpm of the shaft of a traditional motor that aspires the same volume of gas, perform a double number of cycles, and assuming that the expansion volume is designed greater than that of intake, it can be said that the energy obtained for each cycle is greater than twice that one of a traditional engine. The engine of the invention compared to a cycle of a traditional engine has the advantage of recovering energy for greater expansion of the gases exploded and to allow the execution of a double number of useful cycles.

Friction certainly risen to the largest number of moving parts, are very low percentage compared to the energy recovered, whereas for the same useful energy engine object of the present invention can have a number of revolutions per minute less than half of those executed by a traditional engine.

The invention, allows to overcome difficulties that could not be won with systems currently on the market, and is not limited to the representation given from the figures, but can receive improvements and modifications by the man of the art without departing however from the framework of the patent, as defined by the appended claims.

## Claims

1. Internal combustion engine comprising one or more cylinders (11), inside each of which a piston (12) slides, and two crankshafts (2 and 21), which are provided with cranks integral with two gear wheels that have equal diameter (30 and 23) being fixed on the engine crankcase and are free to rotate,
   **characterised in that**

   a) each piston (12) is connected to the first crank of the first crankshaft (21) integral with the first gear wheel (23) through a first connecting rod (10), a rod (7), and a second connecting rod (18),
   b) an end (5) of the rod (7) is connected to one end of an arm (24), the latter being free to rotate at the end (28) around a pin (27) fixed on the engine crankcase,
   c) the two gear wheels (30 and 23) meshing each other,
   d) the second crank of the second crankshaft (2) is connected to the arm (24) by means of a third connecting rod (29).

2. Internal combustion engine according to claim 1 **characterised in that** the two crankshafts (2 and 21) provided with counterweights (1 and 22) integral with the two gear wheels (30 and 23), the first connecting rod (10), the rod (7), the second connecting rod (18), the arm (24), and the third connecting rod (29) are connected to each other through pins (3, 25, 6, 8, 16, 13, and 20) which allow the rotation.

3. Internal combustion engine according to claim 1 or 2 **characterised in that** the first connecting rod (10) is connected to one end of the rod (7), the second connecting rod is connected to an intermediate point of the rod (7), the arm (24) is connected to the other end of the rod (7).

4. Internal combustion engine according to claim 3 **characterised in that** the first connecting rod (10), the second connecting rod and the arm (24) are connected to the rod (7) by means of pins (6, 8, and 16) which allow the rotation.

5. Internal combustion engine according to claim 1 or 2 **characterised in that** the first connecting rod (10) and the second connecting rod are connected to the same end of the rod (7).

6. Internal combustion engine according to claim 5 **characterised in that** the first connecting rod (10) and the second connecting rod are connected to the same end of the rod (7) by means of a pin (8) that allows the rotation.

7. Internal combustion engine according to claim 1 or 3 or 5 **characterised in that** the third connecting rod (29) is mounted to the crank of the crankshaft (2) at one end, and to an intermediate point of the arm (24) at the other end.

8. Internal combustion engine according to claim 7 **characterised in that** the third connecting rod (29) at the two ends is connected to the crankshaft (2) and to the arm (24) by means of pins (3 and 25) which allow the rotation.

9. Method to build an internal combustion engine according to any preceding claim, **characterised in that** the coordinates of the end of the first connecting rod (10), connected to the rod (7), are a function of the following elements: the coordinates of the rotation points of the crankshafts (2 , 21), the coordinates of the pin (27) around which the arm (24) rotates, the radii of the cranks of the crankshaft, the lengths of the first (10) and the second connecting rod (18), the length of the rod (7), the initial angles of the cranks of the first and the second crankshafts (2,21) with the abscissa axis as reference, the angle between the line joining the centres of the pins (27 and 25) and the line joining the centres of the pins (27 and 6), the length of the line joining the centres of the pins (27 and 25), and the line joining the centres of the pins (27 and 6) belonging to the arm (24) and that, by suitably varying the sizes of the elements, the coordinates of the rotation points of crankshafts (2 21), the coordinates of the two arms that rotate around the pin (27), the radii of the cranks of the crankshafts, the lengths of the first (10) and the second connecting rod (18), the length of rod (7), the initial angles of the cranks of the first and the second crankshafts (2,21) with the abscissa axis as reference, the angle between the two arms that rotate around the pin (27), will vary the position of the upper and lower dead points during the combustion cycle.

10. Method to build an internal combustion engine according to the preceding claim, **characterised in that** the elements: the coordinates of the rotation points of the crankshafts (2,21), the coordinates of the two arms that rotate around the pin (27), the radii of the cranks of the crankshafts, the lengths of the first (10) and the second connecting rod (18), the length of the rod (7), the initial angles of the cranks of the first and the second crankshafts (2,21) with the abscissa axis as reference, the angle between the line joining the centres of the pins (27 and 25) and the line joining the centres of the pins (27 and 6), the length of the line joining the centres of the pins (27 and 25) and the line joining the centres of the pins (27 and 6) belonging to the arm (24), can be modified in such a way that the line joining the top dead points is not perpendicular to the axis of the cylinder (11) within which the piston (12) slides, realising a volume of the combustion chamber that is different from that of the exhaust chamber.

**Patentansprüche**

1. Brennkraftmaschine umfassend einen oder mehrere Zylinder (11), in denen ein Kolben (12) gleitet, und zwei Kurbelwellen (2 und 21), die mit Kurbeln versehen sind, welche integral mit zwei Zahnrädern sind, die den gleichen Durchmesser (30 und 23) haben, auf dem Maschinenkurbelgehäuse befestigt sind und frei sind, zu drehen, **dadurch gekennzeichnet, dass**

   a) jeder Kolben (12) mit der ersten Kurbel der ersten Kurbelwelle (21) verbunden ist, die integral mit dem ersten Zahnrad (23) durch einen ersten Verbindungsstab (10), einen Stab (7) und einen zweiten Verbindungsstab (18) ist,
   b) ein Ende (5) des Stabs (7) mit einem Ende eines Arms (24) verbunden ist, wobei das Letztere frei ist, am Ende (28) um einen auf dem Maschinenkurbelgehäuse befestigten Stift (27) zu drehen,
   c) die zwei Zahnräder (30 und 23) ineinandergreifen,
   d) die zweite Kurbel der zweiten Kurbelwelle (2) mit dem Arm (24) durch einen dritten Verbindungsstab (29) verbunden ist.

2. Brennkraftmaschine nach Anspruch 1, **dadurch gekennzeichnet, dass** die zwei Kurbelwellen (2 und 21) mit Gegengewichte (1 und 22) versehen sind, die integral mit den zwei Zahnrädern (30 und 23) sind, wobei der erste Verbindungsstab (10), der Stab (7), der zweite Verbindungsstab (18), der Arm (24) und der dritte Verbindungsstab (29) durch Stifte (3, 25, 6, 8, 16, 13, und 20) miteinander verbunden sind, welche die Drehung ermöglichen.

3. Brennkraftmaschine nach Anspruch 1 oder 2, **dadurch gekennzeichnet, dass** der erste Verbindungsstab (10) mit einem Ende des Stabs (7), der zweite Verbindungsstab mit einem Zwischenpunkt des Stabs (7), und der Arm (24) mit dem anderen Ende des Stabs (7) verbunden sind.

4. Brennkraftmaschine nach Anspruch 3, **dadurch gekennzeichnet, dass** der erste Verbindungsstab (10), der zweite Verbindungsstab und der Arm (24) mit dem Stab (7) durch Stifte (6, 8 und 16) verbunden sind, welche die Drehung ermöglichen.

5. Brennkraftmaschine nach Anspruch 1 oder 2, **dadurch gekennzeichnet, dass** der erste Verbindungsstab (10) und der zweite Verbindungsstab an demselben Ende des Stabs (7) verbunden sind.

6. Brennkraftmaschine nach Anspruch 5, **dadurch gekennzeichnet, dass** der erste Verbindungsstab (10) und der zweite Verbindungsstab an demselben Ende des Stabs (7) durch einen Stift (8) verbunden sind, der die Drehung ermöglicht.

7. Brennkraftmaschine nach Anspruch 1 oder 3 oder 5, **dadurch gekennzeichnet, dass** der dritte Verbindungsstab (29) auf der Kurbel der Kurbelwelle (2) an einem Ende und auf einem Zwischenpunkt des Arms (24) an dem anderen Ende montiert ist.

8. Brennkraftmaschine nach Anspruch 7, **dadurch gekennzeichnet, dass** der dritte Verbindungsstab (29) an den zwei Enden mit der Kurbelwelle (2) und dem Arm (24) durch Stifte (3 und 25) verbunden ist, welche die Drehung ermöglichen.

9. Verfahren zum Bauen einer Brennkraftmaschine nach einem der vorhergehenden Ansprüche, **dadurch gekennzeichnet, dass** die Koordinaten des Endes des ersten Verbindungsstabs (10), der mit dem Stab (7) verbunden ist, abhängig von den folgenden Elementen sind:
Die Koordinaten der Drehstellen der Kurbelwellen (2 , 21), die Koordinaten des Stifts (27), um den der Arm (24) dreht, die Radien der Kurbeln der Kurbelwelle, die Längen des ersten (10) und des zweiten Verbindungsstabs (18), die Länge des Stabs (7), die anfänglichen Winkel der Kurbeln der ersten und der zweiten Kurbelwelle (2,21) mit der Abszissenachse als Referenz, der Winkel zwischen der Linie, die die Mittelpunkte der Stifte (27 und 25) verbindet, und die Linie, die die Mittelpunkte der Stifte (27 und 6) verbindet, die Länge der Linie, die die Mittelpunkte der Stifte (27 und 25) verbindet, und die Länge der Linie, die die Mittelpunkte der Stifte (27 und 6) verbindet, die zum Arm (24) gehören, und dass, durch das geeignete Variieren der Größen der Elemente, die Koordinaten der Drehpunkte der Kurbelwellen (2 21), die Koordinaten der zwei Arme, die um den Stift (27) drehen, die Radien der Kurbeln der Kurbelwellen, die Längen des ersten (10) und des zweiten Verbindungsstabs (18), die Länge des Stabs (7), die anfänglichen Winkel der Kurbeln der ersten und der zweiten Kurbelwelle (2,21) mit der Abszissenachse als Referenz, der Winkel zwischen zwei Armen, die um den Stift (27) drehen, die Position des oberen und des unteren Totpunkts während des Brennzyklusses variieren werden.

10. Verfahren zum Bauen einer Brennkraftmaschine nach dem vorhergehenden Anspruch, **dadurch gekennzeichnet, dass** die Elemente: die Koordinaten der Drehpunkte der Kurbelwellen (2,21), die Koordinaten der zwei Arme, die um den Stift (27) drehen, die Radien der Kurbeln der Kurbelwellen, die Längen des ersten (10) und des zweiten Verbindungsstabs (18), die Länge des Stabs (7), die anfänglichen Winkel der Kurbeln der ersten und der zweiten Kurbelwelle (2,21) mit der Abszissenachse als Referenz, der Winkel zwischen der Linie, die die Mittelpunkte der Stifte (27 und 25) verbindet, und die Linie, die die Mittelpunkte der Stifte (27 und 6) verbindet, die Länge der Linie, die die Mittelpunkte der Stifte (27 und 25) verbindet und der Linie, die die Mittelpunkte der Stifte (27 und 6) verbindet, die zum Arm (24) gehören, so geändert werden können, dass die Linie, die die oberen Totpunkte verbindet, nicht senkrecht zur Achse des Zylinders (11) ist, in dem der Kolben (12) gleitet, indem ein Volumen der Brennkammer erzeugt wird, das sich von dem der Ausströmkammer unterscheidet.

## Revendications

1. Moteur à combustion interne comprenant un ou plusieurs cylindres (11), dans lesquelles un piston (12) coulisse, et deux arbres à manivelle (2 et 21), qui sont pourvus de manivelles solidaires des deux roues dentées qui ont le même diamètre (30 et 23), sont fixées sur le carter du moteur et sont libres de tourner, **caractérisé en ce que**

   a) chacun piston (12) est relié à la première manivelle du premier arbre à manivelle (21) solidaire de la première roue dentée (23) à travers une première tige de raccordement (10), une tige (7) et une seconde tige de raccordement (18),
   b) une extrémité (5) de la tige (7) est reliée à une extrémité d'un bras (24), ce dernier étant libre de tourner à l'extrémité (28) autour d'une cheville (27) fixée sur le carter du moteur,
   c) les deux roues dentées (30 et 23) s'engrenant ensemble,
   d) la seconde manivelle du second arbre à manivelle (2) est reliée au bras (24) au moyen d'une troisième tige de raccordement (29).

2. Moteur à combustion interne selon la revendication 1, **caractérisé en ce que** les deux arbres à manivelle (2 et 21), pourvus de contrepoids (1 et 22) solidaires avec les deux roues dentées (30 et 23), la première tige de raccordement (10), la tige (7), la seconde tige de raccordement (18), le bras (24) et la troisième tige de raccordement (29) sont reliés entre eux au moyen de chevilles (3, 25, 6, 8, 16, 13, et 20), qui permettent la rotation.

3. Moteur à combustion interne selon la revendication 1 ou 2, **caractérisé en ce que** la première tige de raccordement (10) est reliée à une extrémité de la tige (7), la seconde tige de raccordement est reliée à un point intermédiaire de la tige (7), le bras (24) est relié à l'autre extrémité de la tige (7).

4. Moteur à combustion interne selon la revendication 3, **caractérisé en ce que** la première tige de raccordement (10), la seconde tige de raccordement et le bras (24) sont reliés à la tige (7) au moyen de chevilles (6, 8, et 16), qui permettent la rotation.

5. Moteur à combustion interne selon la revendication 1 ou 2, **caractérisé en ce que** la première tige de raccordement (10) et la seconde tige de raccordement sont reliées à la même extrémité de la tige (7).

6. Moteur à combustion interne selon la revendication 5, **caractérisé en ce que** la première tige de raccordement (10) et la seconde tige de raccordement sont reliées à la même extrémité de la tige (7) au moyen d'une cheville (8) qui permet la rotation.

7. Moteur à combustion interne selon la revendication 1, 3 ou 5, **caractérisé en ce que** la troisième tige de raccordement (29) est montée sur la manivelle de l'arbre à manivelle (2) à une extrémité, et à un point intermédiaire du bras (24) à l'autre extrémité.

8. Moteur à combustion interne selon la revendication 7, **caractérisé en ce que** la troisième tige de raccordement (29) aux deux extrémités est reliée à l'arbre à manivelle (2) et au bras (24) au moyen de chevilles (3 et 25) qui permettent la rotation.

9. Procédé pour construire un moteur à combustion interne selon l'une quelconque des revendications précédentes, **caractérisé en ce que** les coordonnées de l'extrémité de la première tige de raccordement (10), reliée à la tige (7), dépendent des éléments suivants :
les coordonnées des points de rotation points des arbres à manivelle (2, 21), les coordonnées de la cheville (27) autour de laquelle le bras (24) tourne, les rayons des manivelles de l'arbre à manivelle, les longueurs de la première (10) et de la seconde tige de raccordement (18), la longueur de la tige (7), les angles initiaux des manivelles du premier et du second arbre à manivelle (2,21) avec l'axe des abscisses comme référence, l'angle entre la ligne qui relie les centres des chevilles (27 et 25) et la ligne qui relie les centres des chevilles (27 et 6), la longueur de la ligne qui relie les centres des chevilles (27 et 25), et la ligne qui relie les centres des chevilles (27 et 6) appartenant au bras (24) et que, à travers la variation appropriée des dimensions des éléments, les coordonnées des points de rotation des arbres à manivelle (2 21), les coordonnées des deux bras qui tournent autour de la cheville (27), les rayons des manivelles des arbres à manivelle, les longueurs de la première (10) et de la seconde tige de raccordement (18), la longueur de tige (7), les angles initiaux des manivelles du premier et du second arbre à manivelle (2,21) avec l'axe des abscisses comme référence, l'angle entre les deux bras qui tournent autour de la cheville (27), vont varier la position des points morts supérieurs et inférieurs lors du cycle de combustion.

10. Procédé pour construire un moteur à combustion interne selon la revendication précédente, **caractérisé en ce que** les éléments : les coordonnées des points de rotation des arbres à manivelle (2,21), les coordonnées des deux bras qui tournent autour de la cheville (27), les rayons des manivelles des arbres à manivelle, les longueurs de la première (10) et de la seconde tige de raccordement (18), la longueur de la tige (7), les angles initiaux des manivelles du premier et du second arbre à manivelle (2,21) avec l'axe des abscisses comme référence, l'angle entre la ligne qui relie les centres des chevilles (27 et 25) et la ligne qui relie les centres des chevilles (27 et 6), la longueur de la ligne qui relie les centres des chevilles (27 et 25) et la ligne qui relie les centres des chevilles (27 et 6) appartenant au bras (24), peuvent être modifiés de manière à ce que la ligne qui relie les points morts supérieurs n'est pas perpendiculaire à l'axe du cylindre (11), dans lequel le piston (12) coulisse, en formant un volume de la chambre de combustion qui est différent de celui de la chambre d'échappement.

# Fig.01

# Fig.02

# Fig.03

**Fig.04**

**Fig.05**

# Fig.06

# Fig.07

## Fig.08

## Fig.09

## Fig.10

## Fig.11

# Fig.12

# Fig.13

Fig.14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5927236 A